(19)

Europäisches
Patentamt
European
Patent Office
Office européen
des brevets

(11) **EP 4 549 388 A1**

(12) **EUROPEAN PATENT APPLICATION**

(43) Date of publication:
**07.05.2025 Bulletin 2025/19**

(21) Application number: **24197509.3**

(22) Date of filing: **30.08.2024**

(51) International Patent Classification (IPC):
**C01D 15/00** (2006.01)  **H01M 10/0562** (2010.01)

(52) Cooperative Patent Classification (CPC):
**C01D 15/00; H01M 10/052; H01M 10/0562;**
C01P 2002/54; H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2023 KR 20230147307**

(71) Applicant: **ECOPRO BM CO., LTD.**
**Cheongju-si, Chungcheongbuk-do 28117 (KR)**

(72) Inventors:
• **JUNG, Hayoung**
**28116 Cheongju-si, Chungcheongbuk-do (KR)**
• **JUNG, Hyunsu**
**28116 Cheongju-si, Chungcheongbuk-do (KR)**
• **YANG, A Reum**
**28116 Cheongju-si, Chungcheongbuk-do (KR)**

(74) Representative: **Beck & Rössig**
**European Patent Attorneys**
**Denninger Str. 169**
**81925 München (DE)**

(54) **SOLID ELECTROLYTE FOR SECONDARY BATTERY AND METHOD OF MANUFACTURING THE SAME**

(57) One embodiment of the present invention provides a solid electrolyte which has an argyrodite crystal structure, and contains lithium, phosphorus, sulfur, element M, and a halogen element, wherein the element M is at least one selected from elements with an oxidation number of 1+ to 6+, and a substitution rate DS (%) of the element M represented by Relational Formula 1 is 0.1 to 1%.

**FIG. 1**

EP 4 549 388 A1

**Description**

BACKGROUND

**1. Field of the Invention**

The present invention relates to a solid electrolyte for a secondary battery and a method of manufacturing the same.

**2. Discussion of Related Art**

Since lithium-ion secondary batteries currently on the market use liquid electrolytes containing flammable organic solvents, there is a possibility of overheating and fires in the event of a short circuit. In this regard, all-solid-state batteries using solid electrolytes instead of liquid electrolytes are being studied.

Unlike liquid electrolytes composed of organic substances, solid electrolytes can act as a separator themselves, allowing the existing separator to be removed. In addition, there is no risk of side reactions due to temperature changes or leakage due to external impacts. Accordingly, since there is no liquid electrolyte and separator, the proportion of active materials that increase energy density may be increased, making it possible to implement a high-density battery.

Solid electrolytes may be broadly divided into three types: sulfide-based, oxide-based, and polymer-based. Among them, sulfide-based electrolytes are characterized by high lithium ionic conductivity because they can form a wide interface between the electrode and the electrolyte.

However, since the chemical stability of sulfide-based solid electrolytes is relatively lower than that of oxide-based solid electrolytes, an improvement in stability is required. Specifically, sulfide-based solid electrolytes are prone to react with moisture in the air or moisture introduced during the process due to various factors such as residual $Li_2S$ or $P_2S_7$ crosslinking sulfur included in the structure. For this reason, there are problems in the manufacturing process, such as a decrease in ionic conductivity due to the generation of hydrogen sulfide gas due to a reaction with moisture.

SUMMARY OF THE INVENTION

The present invention is directed to synthesizing a solid electrolyte with a new composition while maintaining an argyrodite crystal structure by containing the element M in a conventional solid electrolyte of Li-P-S-X (X=Cl, Br, or I) with an argyrodite crystal structure, so that the element M can replace some of the Li site.

In addition, the present invention is directed to providing a sulfide-based solid electrolyte that may suppress the decrease in ionic conductivity due to doping and enhance an ionic conductivity maintenance rate (atmospheric stability) and critical current density(interfacial stability) by containing (doping) at least one selected from with an oxidation number of 2+ to 6+ as element M in an existing sulfide-based solid electrolyte.

In addition, the present invention is directed to providing a sulfide-based solid electrolyte with improved atmospheric stability and interfacial stability by containing a dopant at a specific substitution rate.

One embodiment of the present invention provides a solid electrolyte which has an argyrodite crystal structure, and contains lithium, phosphorus, sulfur, element M, and a halogen element, wherein the element M is at least one selected from elements with an oxidation number of 1+ to 6+, and a substitution rate DS (%) of the element M represented by the following Relational Formula 1 is 0.1 to 1%.

$$[\text{Relational Formula 1}]$$

$$DS(\%) = [M]/([Li]+f^*[M])\times 100$$

in Relational Formula 1, [Li] and [M] are the proportions of lithium and element M based on the number of atoms thereof, respectively, and f is the oxidation number of element M.

The element M may be strontium, cobalt, or a combination thereof.

Another embodiment of the present invention provides a solid electrolyte represented by the following Chemical Formula 1, which has an argyrodite crystal structure and contains lithium, phosphorus, sulfur, element M, and a halogen element, wherein the element M is at least one selected from elements with an oxidation number of 1+ to 6+.

[Chemical Formula 1]          $Li_{7-f^*a-b}(M^f)_aPS_{6-b}X_b$

in Chemical Formula 1, X is chlorine, bromine or iodine, $0.005 \leq a \leq 0.05$ and $1 \leq b \leq 2$, and f is the oxidation number of element M.

The element M may be strontium, cobalt, or a combination thereof.

The solid electrolyte may have an ionic conductivity of 3.0 mS/cm or more at 25°C.

The solid electrolyte may have an ionic conductivity maintenance rate (%) of 60% or more, represented by the following Relational Formula 2, after 2 days under dry conditions in an air atmosphere with a dew point of less than -60 °C.

Ionic conductivity maintenance rate (%) = (ionic conductivity of solid electrolyte after 2 days / ionic conductivity of solid electrolyte after initial synthesis) $\times$ 100    [Relational Formula 2]

Regarding the solid electrolyte, the ratio (CCD2/CCD1) of the critical current density (CCD2) measured in the solid electrolyte where DS (%) is 0.1 to 1% in Relational Formula 1 or $0.005 \leq a \leq 0.05$ in Chemical Formula 1 to the critical current density (CCD1) measured in the solid electrolyte where DS (%) is 0% in Relational Formula 1 or a is 0 in Chemical Formula 1 may be 1.2 or more.

Still another embodiment of the present invention provides a method of manufacturing a solid electrolyte, including mixing precursors containing lithium, phosphorus, sulfur, element M, and a halogen element; and sintering the mixture.

The precursors containing lithium, phosphorus, sulfur, and element M may include at least one selected from a sulfide of Co, a chloride of Co, a sulfide of Sr, and a chloride of Sr..

The sintering process may be performed at a temperature of 400 to 600 °C for 1 to 16 hours in an inert atmosphere.

Yet another embodiment of the present invention provides a lithium secondary battery including the solid electrolyte.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

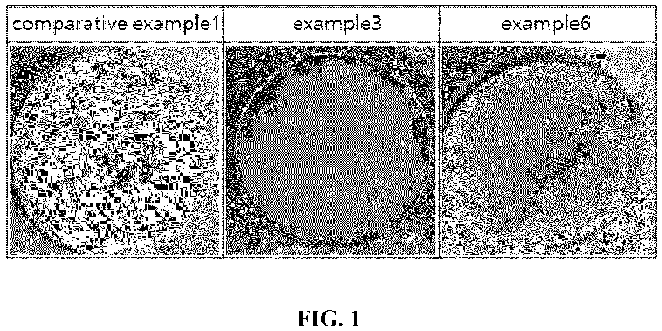

FIG. 1 is a photograph showing the cross-section of a solid electrolyte pellet by disassembling a symmetrical cell (Comparative Example 1, Examples 3 and 6) after CCD analysis and repeated charge/discharge cycling (40 cyc).

DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

One embodiment of the present invention provides a solid electrolyte which has an argyrodite crystal structure and contains lithium, phosphorus, sulfur, element M, and a halogen element, wherein the element M is at least one selected from elements with an oxidation number of 1+ to 6+.

In the solid electrolyte of the present invention, an ionic conductivity maintenance rate and critical current density (CCD) are enhanced, thereby improving atmospheric stability and enhancing interfacial stability between lithium (electrode) and solid electrolyte. The solid electrolyte is characterized by containing elements M at a specific substitution rate in a conventional solid electrolyte containing lithium, phosphorus, sulfur, and a halogen element. The element M is at least one selected from elements with an oxidation number of 1+ to 6+, and may specifically be Sr with an oxidation number of 2+ and/or Co with an oxidation number of 4+.

An object of the present invention is to synthesize a solid electrolyte with a new composition while maintaining an argyrodite crystal structure by containing the element M in a conventional solid electrolyte of Li-P-S-X (X=Cl, Br, or I) with an argyrodite crystal structure, so the element M can replace some of the Li site. When element M is Sr with an oxidation number of 2+, one element Sr replaces two Li (oxidation number 1+), and when element M is Co with an oxidation number of 4+, one element Co replaces four Li (oxidation number of 1+).

When some of lithium and phosphorus are substituted with the element M, according to the hard soft acid base (HSAB) theory, the weak acid M combines strongly with the weak base S (oxidation number 2-) to form an M-S bond, which can suppress the $H_2O$ reaction in the atmosphere and enhance atmospheric stability.

In addition, the azyrodite crystal structure is face centered cubic (FCC) and is included in the space group F-43m. This crystal structure may be confirmed by X-ray diffraction analysis, and there is no particular limitation when applying known X-ray diffraction analysis.

The solid electrolyte of the present invention is characterized in that the substitution rate DS (%) of the element M represented by the following Relational Formula 1 is 0.1 to 1%.

$$[\text{Relational Formula 1}]$$

$$DS(\%) = [M]/([Li]+f^*[M]) \times 100$$

In Relational Formula 1, [Li] and [M] are the proportions of lithium and element M based on the number of atoms thereof, respectively, and f is the oxidation number of element M.

DS (%) may be 0.1 to 1%, for example, 0.1 to 0.8%, preferably 0.1 to 0.6%. When the DS value is less than 0.1%, the doping effect is not sufficiently expressed, and conversely, when it exceeds 1%, the ionic conductivity rapidly decreases to less than 3.0 mS/cm, making application difficult.

Meanwhile, DS (%) refers to the ratio (%) based on the number of atoms replaced by the M element at the Li site. When part of lithium is replaced with the M element, the ionic conductivity maintenance rate and critical current density (CCD) are enhanced within the DS (%) design range, thereby improving atmospheric stability and enhancing interfacial stability between lithium (electrode) and solid electrolyte.

Another embodiment of the present invention provides a solid electrolyte represented by the following Chemical Formula 1, which has an argyrodite crystal structure and contains lithium, phosphorus, sulfur, element M, and a halogen element, wherein the element M is at least one selected from elements with an oxidation number of 1+ to 6+.

$$[\text{Chemical Formula 1}] \qquad Li_{7-f^*a-b}(M^f)_a PS_{6-b} X_b$$

In Chemical Formula 1, X may be chlorine, bromine, or iodine, and $0.005 \leq a \leq 0.05$, $1 \leq b \leq 2$.

In addition, in Chemical Formula 1, when the element M is an element (M2) or Sr with an oxidation number of 2, one element M2 (Sr) replaces two Li (oxidation number of 1+), and when the element M is an element (M4) or Co with an oxidation number of 4+, one element M4 (Co) replaces four Li (oxidation number of 1+).

In addition, X may be chlorine, bromine, or iodine as a halogen element, and is preferably chlorine. The halogen element may enhance ionic conductivity by replacing some of the S site and securing a new path for lithium ions in the crystal lattice.

The solid electrolyte may satisfy $0.005 \leq a \leq 0.05$, $1 \leq b \leq 2$, specifically, $0.009 \leq a \leq 0.05$, $0.01 \leq a \leq 0.05$, $0.01 \leq a \leq 0.03$, $0.015 \leq a \leq 0.025$, $1.2 \leq b \leq 1.8$, and $1.4 \leq b \leq 1.6$.

The solid electrolyte of the present invention may have an ionic conductivity of 3.0 mS/cm or more at 25 °C, for example, after initial synthesis of the solid electrolyte, the ionic conductivity may be 3.3 mS/cm or more, 3.5 mS/cm or more, 3.7 mS/cm or more, 4.0 mS/cm or more, or 4.2 mS/cm or more, and the upper limit is not particularly limited, but may be, for example, 10 mS/cm or less, 7 mS/cm or less, 5 mS/cm or less, or 4.5 mS/cm or less.

In addition, the solid electrolyte may have an ionic conductivity maintenance rate (%) of 60% or more, for example 65% or more, 68% or more, 70 % or more, or 75 % or more, represented by the following Relational Formula 2, after 2 days under dry conditions in an air atmosphere with a dew point of less than -60 °C, and the upper limit is not particularly limited, but may be 95% or less or 90% or less. Accordingly, there is an effect of enhancing atmospheric stability by reducing reactivity to moisture and oxygen.

Ionic conductivity maintenance rate (%) = (ionic conductivity of solid electrolyte after 2 days / ionic conductivity of solid electrolyte after initial synthesis) $\times$ 100    [Relational Formula 2]

Regarding the solid electrolyte, the ratio (CCD2/CCD1) of the critical current density (CCD2) measured in the solid electrolyte where DS (%) is 0.1 to 1% in Relational Formula 1 or $0.005 \leq a \leq 0.05$ in Chemical Formula 1 to the critical current density (CCD1) measured in the solid electrolyte where DS (%) is 0% in Relational Formula 1 or a is 0 in Chemical Formula 1 may be 1.2 or more, for example 1.2 or more, 1.4 or more, 1.5 or more, or 1.7 or more. This has the effect of improving the interfacial stability between the solid electrolyte and lithium (electrode) and suppressing dendrite growth.

Another embodiment of the present invention provides a method of manufacturing a solid electrolyte. The manufacturing method is not particularly limited, but may include, for example, mixing precursors containing lithium, phosphorus, sulfur, element M, and halogen element; and sintering the mixture.

The mixing process is not particularly limited as long as it is performed by a mixing method known in the art. For example, a mechanical milling method, a melt quenching method, a liquid phase method, and the like may be applied. For example, in the case of the mechanical milling method, precursors may be obtained by mechanically grinding compounds including Li, P, S, a halogen, and Sr or Co as raw materials in a predetermined ratio corresponding to the composition of the target solid electrolyte.

The precursor containing lithium, phosphorus, sulfur, and element M may be $CoS_2$, SrS, or $SrCl_2$. In addition, the mixing process may further include mixing a precursor containing a halogen element (X=Cl, Br, I), for example, LiCl.

The sintering process may be performed for 1 to 16 h at a temperature of 400 to 600 °C in an inert atmosphere, for example, for 2 to 16 h, 2 to 14 h, or 2 to 12 h at a temperature of 450 to 600 °C, 500 to 600 °C, or 530 to 600 °C under an $N_2$ or Ar gas atmosphere. The conditions of the sintering process are not particularly limited as long as the sintering process is performed sufficiently to form the argyrodite crystal structure of the solid electrolyte.

Still another embodiment of the present invention embodiment of the present invention provides a lithium secondary battery including the solid electrolyte.

The lithium secondary battery may include a positive electrode, a negative electrode located opposite the positive electrode, and the solid electrolyte interposed between the positive electrode and the negative electrode.

The positive electrode and negative electrode may be applied without particular limitation as long as they are known technologies used in the technological field of the lithium secondary battery.

In addition, the lithium secondary battery may include a battery container (case) that accommodates an electrode assembly including the positive electrode, the negative electrode, and the solid electrolyte, and a sealing member that seals the battery container.

At this time, depending on the shape of the battery container (case), the lithium secondary battery may be classified into a can-type lithium secondary battery in which the electrode assembly is built into a metal can and a pouch-type lithium secondary battery in which the electrode assembly is built into a pouch made of a sheet such as an aluminum laminate.

Hereinafter, the present invention will be described in detail through examples, but these are intended to illustrate the present invention in more detail, and the scope of the present invention is not limited to the following examples.

**Examples**

(Mixing process)

A lithium precursor Li2S, a phosphorus precursor $P_2S_5$, a chlorine precursor LiCl, and an M precursor ($CoS_2$, $WS_2$, $WCl_6$, BaS, $BaCl_2$, SrS, $SrCl_2$, and $TaCl_5$) were weighed in stoichiometric ratios to obtain the compositions shown in Table 1 below using a high-energy milling method in a dry room (DP -60 °C).

Precursors with the correct stoichiometric ratio were input into a 330 ml $ZrO_2$ jar, $ZrO_2$ 3 mm balls were input in an amount 10 times the amount of raw material, and the jar was fastened.

Milling was performed at 330 rpm for a total of 18 h using a planetary mill.

(Sintering process)

The mixture prepared in the mixing process was put into an $Al_2O_3$ crucible and then charged into a tube furnace for sintering.

In order to suppress a reaction with gas present inside the tube furnace, sintering was performed while flowing inert N2 gas, and at this time, the sintering conditions were 510 °C, a temperature increase rate of 3 °C/min, a holding time of 12hr, and natural cooling.

**Experimental Examples**

(Evaluation methods)

Ionic conductivity measurement

An electrochemical impedance spectroscopy (EIS) analysis method was used to evaluate the ionic conductivity of the solid electrolyte. A pressure cell was manufactured by cold pressing 200 mg of powder at 4 tons for 2 min using a 10 mm diameter mold, and measurements were made at a frequency ranging from 1 Hz to 1 MHz.

Ionic conductivity was calculated using the equation $\sigma = t/RA$. Here, R is the resistance of the solid electrolyte, t is the thickness of the solid electrolyte, and A is the area of the solid electrolyte.

Ionic conductivity maintenance rate

The ionic conductivity of the synthetic products of Examples and Comparative Examples was analyzed after exposure for 48 h in a dry room (DP -60 °C), and the ionic conductivity maintenance rate was calculated using the following calculation formula.

Ionic conductivity maintenance rate (%) = (ionic conductivity after 48 h exposure) / (ionic conductivity after synthesis) $\times$ 100 (%)         [Calculation Formula 1]

Critical Current Density (CCD)

1) Manufacture of Li symmetric cell (LiILPSCIILi)

200 mg of the solid electrolyte powder prepared in Examples and Comparative Examples was cold-pressed at 4 tons for 2 min using a mold with a diameter of 10 mm.
A pressure cell was manufactured by placing Li metal on both ends of the solid electrolyte (Li/SE/Li), and in this case, Li metal with a thickness of 0.02 T was used.

2) CCD evaluation

A constant current was applied to the manufactured Li symmetric cell and repeated charge/discharge cycling was performed. As cycling progressed, the applied current density was increased to confirm the point where a short circuit occurred.

3) Confirmation of cross-section of solid electrolyte pellet after CCD analysis and cycling (40 eye)

After CCD analysis and repeated charge/discharge cycling (40 cyc), the symmetrical cells (Comparative Example 1, Examples 3 and 6) were disassembled and photographs of the cross-section of the solid electrolyte pellet were visually confirmed, and the results are shown in FIG. 1.

[Experimental Example 11: Analysis of ionic conductivity, ionic conductivity maintenance rate, and critical current density

[Table 1]

| | Composition | | | | Evaluation | | |
|---|---|---|---|---|---|---|---|
| | $L_{5.5-f*a}M^f_aPS_{4.5}Cl$ | | | DS (M substitution degree) | Ionic conductivity | Ionic conductivity maintenance rate | Critical current density |
| | M | f | a | % | mS/cm | % | mA/cm$^2$ |
| Comparative Example 1 | - | - | - | - | 4.33 | 61.7 | 0.35 |
| Example 1 | Co | 4 | 0.01 | 0.18 | 4.11 | 60.8 | 0.52 |
| Example 2 | Co | 4 | 0.02 | 0.36 | 4.25 | 66.3 | 0.57 |
| Example 3 | Co | 4 | 0.03 | 0.55 | 4.03 | 70.3 | 0.6 |
| Comparative Example 2 | Co | 4 | 0.09 | 1.64 | 2.75 | - | - |
| Example 4 | Sr | 2 | 0.01 | 0.18 | 4.45 | 71.2 | 0.43 |
| Example 5 | Sr | 2 | 0.02 | 0.36 | 3.65 | 77.2 | 0.47 |
| Example 6 | Sr | 2 | 0.03 | 0.55 | 3.33 | 87.4 | 0.53 |
| Comparative Example 3 | Sr | 2 | 0.09 | 1.64 | 2.43 | - | - |

Referring to Table 1, it was confirmed that when doping Sr or Co in Examples 1 to 6, the ionic conductivity was maintained at 3 mS/cm or more and the ionic conductivity maintenance rate was improved to 60% or more, preferably 70% or more.

In addition, in the case of evaluating the critical current density, it was confirmed that the density increased by more than 1.2 to 1.7 times (Example 4, Example 3) compared to Comparative Example 1. Accordingly, it is analyzed that the interfacial stability between Li metal and the solid electrolyte is improved by showing inhibition of Li dendrite growth and stable Li plating/stripping behavior.

When the Co or Sr substitution rate exceeded 1%, the ionic conductivity was found to be 3 mS/cm or less and was significantly lower than the reference (Comparative Example 1).

[Experimental Example 21: Confirmation of cross-section of solid electrolyte pellet after CCD analysis and cycling (40 cyc)

Referring to FIG. 1, in the case of Comparative Example 1 in which no dopant was added, it was confirmed that Li grew on the internal solid electrolyte cross section. On the other hand, in Examples 3 and 6 in which the dopant of the present invention was added, it was confirmed that the internal solid electrolyte cross section maintained its initial state without any abnormality. From this, it is predicted that the solid electrolyte of the present invention will inhibit Li dendrite growth and improve symmetrical cell life by enhancing the stability of the Li/SE interface.

The present invention can provide a sulfide-based solid electrolyte with improved ionic conductivity and enhanced atmospheric stability and interfacial stability. Specifically, it is possible to develop a solid electrolyte that maintains an ionic conductivity maintenance rate (%) of 60% or more after 2 days under dry conditions in an air atmosphere with a dew point of less than -60 °C while securing an ionic conductivity of 3.0 mS/cm or more at 25 °C and whose CCD(critical current density) increases by 1.2 to 1.7 times compared to before doping.

As described above, although the present invention has been shown and described with respect to specific embodiments, it will be apparent to those skilled in the art that the present invention can be modified and changed in various ways to the extent that it does not depart from the following claims.

**Claims**

1. A solid electrolyte,

   having an argyrodite crystal structure, and
   containing lithium, phosphorus, sulfur, element M, and a halogen element,
   wherein the element M is at least one selected from elements with an oxidation number of 1+ to 6+, and
   a substitution rate DS (%) of the element M represented by the following Relational Formula 1 is 0.1 to 1%:

   [Relational Formula 1]

   $$DS (\%) = [M]/([Li]+f^*[M]) \times 100$$

   in Relational Formula 1,

   [Li] and [M] are proportions based on the number of atoms of lithium and element M, respectively, and
   f is the oxidation number of element M.

2. The solid electrolyte of claim 1, wherein the element M is strontium, cobalt, or a combination thereof.

3. The solid electrolyte of claim 1 or 2, wherein
   the solid electrolyte is represented by the following Chemical Formula 1:

   [Chemical Formula 1]          Li7-f*a-b(Mf)aPS6-bXb

   in Chemical Formula 1, X is chlorine, bromine or iodine, 0.005≤a≤0.05 and 1≤b≤2, and f is the oxidation number of element M

4. A solid electrolyte,

having an argyrodite crystal structure, and
containing lithium, phosphorus, sulfur, element M, and a halogen element,
wherein the element M is at least one selected from elements with an oxidation number of 1+ to 6+, and
the solid electrolyte is represented by the following Chemical Formula 1:

[Chemical Formula 1]    $Li_{7-f^*a-b}(M^f)_aPS_{6-b}X_b$

in Chemical Formula 1, X is chlorine, bromine or iodine, $0.005{\leq}a{\leq}0.05$ and $1{\leq}b{\leq}2$, and f is the oxidation number of element M.

5. The solid electrolyte of claim 4, wherein the element M is strontium, cobalt, or a combination thereof.

6. The solid electrolyte of one of claims 1 to 5, wherein the solid electrolyte has an ionic conductivity of 3.0 mS/cm or more at 25 °C.

7. The solid electrolyte of one of claims 1 to 6, wherein an ionic conductivity maintenance rate (%) represented by the following Relational Formula 2 after 2 days under dry conditions in an air atmosphere having a dew point of less than -60 °C is 60% or more:

Ionic conductivity maintenance rate (%) = (ionic conductivity of solid electrolyte after 2 days / ionic conductivity of solid electrolyte after initial synthesis) $\times$ 100     [Relational Formula 2]

8. The solid electrolyte of one of claims 1 to 7, wherein a ratio (CCD2/CCD1) of the critical current density (CCD2) measured in the solid electrolyte where DS (%) is 0.1 to 1% in Relational Formula 1 or a is greater than or equal to 0.005 and less than or equal to 0.05 in Chemical Formula 1 to the critical current density (CCD1) measured in the solid electrolyte where DS (%) is 0% in Relational Formula 1 or a is 0 in Chemical Formula 1 is 1.2 or more.

9. A method of manufacturing the solid electrolyte of one of claims 1 to 8, comprising:

mixing precursors containing lithium, phosphorus, sulfur, element M, and a halogen element; and
sintering the mixture.

10. The method of claim 9, wherein the precursors containing lithium, phosphorus, sulfur, and element M includes at least one selected from a sulfide of Co, a chloride of Co, a sulfide of Sr, and a chloride of Sr.

11. The method of claim 9 or 10, wherein the sintering is performed at a temperature of 400 to 600 °C for 1 to 16 h in an inert atmosphere.

12. A lithium secondary battery comprising the solid electrolyte of one of claims 1 to 8.

| comparative example1 | example3 | example6 |
|---|---|---|

**FIG. 1**

Europäisches
Patentamt

European
Patent Office

Office européen
des brevets

# EUROPEAN SEARCH REPORT

Application Number

EP 24 19 7509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/173430 A1 (MATSUDA ATSUNORI [JP] ET AL) 2 June 2022 (2022-06-02) * examples 9-30 * ----- | 1-12 | INV. C01D15/00 H01M10/0562 |
| X | US 2023/041325 A1 (WANG GUOGUANG [CN] ET AL) 9 February 2023 (2023-02-09) * examples * ----- | 1-12 | |
| X | WO 2023/128580 A1 (LG ENERGY SOLUTION LTD [KR]) 6 July 2023 (2023-07-06) * examples; table 1 * ----- | 1-12 | |
| X | US 2023/327185 A1 (RYU SAEBOM [KR] ET AL) 12 October 2023 (2023-10-12) * paragraph [0062]; claims; examples * ----- | 1-12 | |
| | | | TECHNICAL FIELDS SEARCHED (IPC) C01D H01M |

The present search report has been drawn up for all claims

| Place of search | Date of completion of the search | Examiner |
|---|---|---|
| Munich | 11 March 2025 | Marucci, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 7509

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2022173430 A1 | 02-06-2022 | CN | 113544088 A | 22-10-2021 |
| | | JP | 7548508 B2 | 10-09-2024 |
| | | JP | WO2020184464 A1 | 17-09-2020 |
| | | US | 2022173430 A1 | 02-06-2022 |
| | | WO | 2020184464 A1 | 17-09-2020 |
| US 2023041325 A1 | 09-02-2023 | CN | 111092262 A | 01-05-2020 |
| | | EP | 4084181 A1 | 02-11-2022 |
| | | JP | 7352030 B2 | 27-09-2023 |
| | | JP | 2023509023 A | 06-03-2023 |
| | | KR | 20210136101 A | 16-11-2021 |
| | | US | 2023041325 A1 | 09-02-2023 |
| | | WO | 2021128738 A1 | 01-07-2021 |
| WO 2023128580 A1 | 06-07-2023 | CN | 117099235 A | 21-11-2023 |
| | | EP | 4307422 A1 | 17-01-2024 |
| | | JP | 2023096783 A | 07-07-2023 |
| | | KR | 20230132804 A | 18-09-2023 |
| | | US | 2024274869 A1 | 15-08-2024 |
| | | WO | 2023128580 A1 | 06-07-2023 |
| US 2023327185 A1 | 12-10-2023 | KR | 20220085621 A | 22-06-2022 |
| | | US | 2023327185 A1 | 12-10-2023 |
| | | WO | 2022131705 A1 | 23-06-2022 |

EPO FORM P0459

For more details about this annex : see Official Journal of the European Patent Office, No. 12/82